Europäisches Patentamt

European Patent Office

Office européen des brevets

(19)

(11) Veröffentlichungsnummer: **0 298 401 B1**

(12) **EUROPÄISCHE PATENTSCHRIFT**

(45) Veröffentlichungstag der Patentschrift: **02.10.91**

(51) Int. Cl.⁵: **B60D 1/14**, B62D 13/02

(21) Anmeldenummer: **88110615.7**

(22) Anmeldetag: **02.07.88**

(54) Anhängervorrichtung, insbesondere für landwirtschaftliche Zugfahrzeuge.

(30) Priorität: 04.07.87 DE 3722209
05.09.87 DE 3729856
22.01.88 DE 3801746

(43) Veröffentlichungstag der Anmeldung:
**11.01.89 Patentblatt 89/02**

(45) Bekanntmachung des Hinweises auf die
Patenterteilung:
**02.10.91 Patentblatt 91/40**

(84) Benannte Vertragsstaaten:
**AT CH DE FR LI**

(56) Entgegenhaltungen:
**DE-A- 3 246 572
DE-A- 3 425 436
DE-B- 1 022 915
DE-C- 529 939
US-A- 4 173 352**

(73) Patentinhaber: **Rief, Roland
Goppertsweiler 22
W-7995 Neukirch(DE)**

(72) Erfinder: **Rief, Roland
Goppertsweiler 22
W-7995 Neukirch(DE)**

(74) Vertreter: **Patentanwälte Dipl.-Ing. E. Eisele
Dr.-Ing. H. Otten
Seestrasse 42
W-7980 Ravensburg(DE)**

**Beschreibung**

Die Erfindung betrifft eine Anhängervorrichtung für Zugfahrzeuge, insbesondere landwirtschaftliche Zugfahrzeuge nach dem Oberbegriff des Anspruchs 1.

Bei landwirtschaftlichen Fahrzeugen ist es oft sehr wichtig, daß der Anhänger möglichst spurgetreu hinter dem Schlepperfahrzeug herfährt. So wird beispielsweise mit einem Frontmäher an einem Schlepperfahrzeug eine Mittelschwade zwischen die Räder unterhalb des Schlepperfahrzeugs gelegt, die dann vom nachgezogenen Ladewagen aufgenommen werden soll. In einer Kurve fährt jedoch der Ladewagen einen deutlich engeren Radius als der Schlepper, so daß ein großer Teil des gemähten Guts nicht mehr von an der Vorderfront des Anhängers angeordneten Aufnahmevorrichtung (pick-up) aufgenommen werden kann und unter Umständen kaputtgefahren wird.

Beim Anhängerbetrieb hat die Zugdeichsel zwei Aufgaben. Zum einen wird der zwischen Schlepperfahrzeug und Anhänger notwendige Abstand geschaffen, um in Kurvenfahrten eine Berührung zwischen Zugfahrzeug und Anhänger zu vermeiden. Bei einem Einachs-Anhänger ist diese Zugdeichsel hierfür starr am Anhänger befestigt. Bei einem Zweiachs-Anhänger hat die Zugdeichsel weiterhin die Aufgabe, die Vorderachse des Anhängers zu lenken. Die Nachlaufeigenschaften eines Anhängers hängen u. a. von der Befestigungsgeometrie der Anhängerdeichsel ab. Ist die Anhängerkupplung wie üblich unmittelbar am Ackerschlepper befestigt, so ist zur Erzeugung des notwendigen Abstandes, um ein ungehindertes Einknicken der Zugmaschine gegenüber dem Anhänger zu gewährleisten, eine Zugdeichsel von ca. 1,5 m notwendig. Führt nun das Zugfahrzeug einen bestimmten Einschlagwinkel aus, so fährt das Zugfahrzeug einen größeren Radius und der Anhänger einen kleineren Radius. Der Anhänger fährt demnach nicht mehr in der Spur des Zugfahrzeugs.

Um hier Abhilfe zu schaffen, sind verschiedene Vorschläge bekanntgeworden. Der Abstand zwischen der Hinterachse des Zugfahrzeugs zum Kupplungsdrehpunkt zwischen diesem und Anhänger bestimmt die Größe des Ausschwenkens und damit auch den Nachlaufradius des Anhängers. Um einen möglichst spurgetreuen Nachlauf des Anhängers zu erzeugen, muß der Drehpunkt der Kupplung weit nach hinten in Richtung Anhänger gelegt werden. Bei einachsigen Anhängern wirkt jedoch eine bemerkenswerte Stützlast auf die Anhängerkupplung, so daß bei einem großen Abstand derselben vom Zugfahrzeug erhebliche Hebelkräfte bzw. Momente durch das Anhängergewicht auf den Schlepper einwirken.

Die Problematik des notwendigen Abstandes zwischen Zugfahrzeug und Anhänger, um ein ungehindertes Einknicken des Zugwagens in Kurvenfahrten zu ermöglich, ist auch bei LKW-Lastzügen oder Wohnwagenanhänger bekannt. Hier stört der notwendige große Abstand, insbesondere die hiermit verbundene Verkürzung der Ladefläche infolge der maximal zulässigen Gesamtlänge von z. B. 18 m bei Lastzügen, bzw. die Längenbeschränkungen bei Wohnwagenanhängern. Bei höheren Geschwindigkeiten ist weiterhin eine Erhöhung des Luftwiderstands des Lastzugs von Nachteil.

Aus der DE-A-30 47 092 ist eine Anhängervorrichtung bekanntgeworden, bei der der Anhänger im geringen Abstand hinter dem Zugwagen herführbar ist. Bei Kurvenfahrten wird eine kurvenäußere Zugdeichsel aus einem Gelenkpunkt ausgeklingt, so daß der Aufbau des Anhängers um einen kurveninneren Gelenkpunkt am Zugwagen geschwenkt wird, wobei eine zentrale Lenkgabel mit Hilfe einer ausziehbaren Teleskopstange derart verlängert wird, daß der Kurvengeometrie entsprochen wird.

Die gleiche Problematik löst eine Lenkvorrichtung gemäß der CH-A-570 294 ebenfalls durch eine ausziehbare Zugdeichsel zwischen Zugfahrzeug und Anhänger, wobei die Regulierung der Länge der Zugdeichsel durch mindestens zwei Diagonalstreben erfolgt. Diese Diagonalstreben sind an zwei quer liegenden, sogenannten Wippen befestigt, die um einen mittleren Drehpunkt in der Horizontalebene schwenkbar gelagert sind. Diese Wippen können demnach keine Führung zwischen Zugfahrzeug und Anhänger bewirken. Dies geschieht über die ausziehbare Teleskopdeichsel während die Zugkraft über die scherenförmigen Diagonalstreben übertragen wird.

Ähnlich wie bei dem Gegenstand der DE-A-30 47 092 wird beim Gegenstand der CH-A-570 294 die Zugkraft auf einen kurveninneren Gelenkpunkt übertragen. Bei beiden Konstruktionen ist jedoch insgesamt eine aufwendige Führungs- und Zugmechanik notwendig, die eine stabile Anhängervorrichtung ergeben. Dies gilt insbesondere für die teleskopartig ausfahrbaren Zugstangen und die zusätzlichen Stabilisatoren.

Aus der DE-A-32 46 572 ist weiterhin eine Lenkvorrichtung nach dem Gattungsbegriff bekanntgeworden, bei der zwischen Zugfahrzeug und zweiachsigem Anhänger zwei scherenartig verlaufende Diagonalstreben vorgesehen sind. Hierdurch wird zwar ein möglichst spurgetreuer Nachlauf des Anhängers gegenüber dem Fahrzeug ermöglicht, wobei der Aufbau der Anhängervorrichtung ohne ausziehbare Zugdeichsel und sonstige Stabilisatoren auskommt. Durch die scherenförmigen Diagonalstreben wird darüber hinaus bei der bekannten Vorrichtung eine äußerst kurze Baulänge zwischen Zugfahrzeug und Anhänger gewährleistet, wobei durch das scherenförmige Auseinanderklappen der Vorrichtung in Kurvenfahrt der gedachte Kreuzungspunkt zwischen den beiden Längsachsen des Zugfahrzeugs und des Anhängers nach hinten wandert, so daß der eingangs geschilderte Effekt einer guten, spurgetreuen Nachlaufeigenschaft gewährleistet ist. Die Kraftübertragung erfolgt dabei über die Gelenkpunkte der Anhängervorrichtung.

Die bekannte Vorrichtung gemäß DE-A-32 46 572 hat jedoch den Nachteil, daß die Führungsstabilität dieser lenkbaren Anhängerachse nicht gewährleistet ist, da das Scherensystem mit einem außerordentlich kurzen Abstand zwischen Anhänger und Zugfahrzeug ruckartig in die Auslenkpositionen umklappt. Dies kann zu einem starken Ausbrechen des Anhängers in Kurvenfahrt führen, so daß eine derartige Konstruktion im Straßenverkehr kaum zugelassen werden kann.

Aus der DE-B 1 022 915 ist weiterhin eine Anhängevorrichtung bekannt geworden, bei welcher eine starre Zugstrebe vom Zugfahrzeug aus mit dem Drehschemel zur Lenkung der Vorderachse des zweiachsigen Anhängers verbunden ist. Anordnung und Zweck dieser geraden Zugstrebe in Verbindung mit einer Diagonalstrebe direkt zwischen den Fahrzeugen ist die gute Spurtreue des zweiachsigen Anhängers bei gefährlichen Bremsmanövern.

Der Erfindung liegt die Aufgabe zugrunde, eine Anhängervorrichtung für einachsige Anhänger zu schaffen, die bei geringstem mechanischem Aufwand einen möglichst spurgetreuen Nachlauf des Anhängers gegenüber dem Zugfahrzeug in Kurven gestattet, wobei insbesondere ein Ausbrechen bzw. ein unruhiger Lauf des Anhängers vermieden wird. Insbesondere soll ein kurzer Abstand zwischen Zugfahrzeug und Anhänger gewährleistet sein.

Diese Aufgabe wird ausgehend von einer Anhängervorrichtung der einleitend bezeichneten Art erfindungsgemäß durch die kennzeichnenden Merkmale des Anspruchs 1 gelöst.

In den Unteransprüchen sind vorteilhafte Weiterbildungen und Ausgestaltungen der Anhängervorrichtung nach dem Hauptanspruch angegeben.

Die erfindungsgemäße Anhängervorrichtung hat den Vorteil, daß die Fahreigenschaften entscheidend verbessert werden. Durch die gerade Zugstrebe zwischen Zugfahrzeug und unmittelbarer Anlenkung am einachsigen Anhänger wird in Geradeausfahrt eine unmittelbare Kraftübertragung in Richtung der Fahrzeuglängsachsen ermöglicht, wodurch negative Momenteneinwirkungen und Hebelkräfte vermieden werden. Die Erfindung verbindet die Vorteile einer an Gelenken angebrachten und mit den Fahrzeuglängsachsen fluchtenden starren Verbindungsstange mit den Vorteilen von lenkbaren Diagonalstreben.

Gemäß der Erfindung ist nur eine Diagonalstrebe, d. h. eine die Längsachse kreuzende Verbindungsstrebe vorgesehen, die vorzugsweise beidseitig gekröpft ausgebildet ist. Anstelle einer zweiten bekannten Diagonalstrebe tritt die gerade Zugstrebe, die in Geradeausfahrt in der Fahrzeuglängsachse liegt. Dies führt zu einer spurgetreueren Nachlaufeigenschaft des Anhängers.

In Weiterbildung der Erfindung ist ein Torsions/Kipp-Gelenk zur Durchführung einer vertikalen Knickbewegung und zum Ausgleich der Stützlast des einachsigen Anhängers vorgesehen. Ein entsprechendes Torsions/Kipp-Gelenk zur Durchführung dieser Bewegung ist z. B. in der DE 33 16 128 (Bezugszeichen 16) angegeben.

Ein vorteilhaftes und zweckmäßiges Ausführungsbeispiel ist in der Zeichnung dargestellt und in der nachfolgenden Beschreibung näher erläutert. Es zeigen

Fig. 1a    eine bekannte Anhängervorrichtung mit Anhängerdeichsel und Kupplungspunkt beim Schlepperfahrzeug,

Fig. 1b    eine bekannte Anhängervorrichtung mit einem nach hinten versetzten Drehpunkt,

Fig. 1c    eine Anhängervorrichtung mit dem erfindungsgemäßen Anhängerkupplungssystem bei kleinem Einschlagwinkel,

Fig. 2    eine Anhängervorrichtung mit einer Diagonalstrebe und einer in Fahrzeuglängsachse fluchtenden Zugstrebe, gemäß Anspruch 1.

Bei der in der Fig. 1a dargestellten Anordnung in herkömmlicher Bauweise ist ein Zugfahrzeug (1), z. B. ein Ackerschlepper, in Kurvenfahrt vor einem Anhänger (2) dargestellt. Das Zugfahrzeug (1) ist über eine herkömmliche Deichsel (3) mit einer üblichen Länge von $1_1 \approx 1,5$ m verbunden, wobei der Ankupplungspunkt und Drehpunkt (4) im hinteren Bereich des Zugfahrzeugs (1) angeordnet ist. Bei dem Ausführungsbeispiel nach Fig. 1a ist der Einschlagwinkel zwischen der Längsachse (5) des Zugfahrzeugs (1) und der Längsachse (6) des Anhängers (2) mit $\alpha_1$ angegeben. In diesem Fall führt das Zugfahrzeug eine Kreisbewegung mit einem Radius $R_1$ und der Anhänger einen Radius $R_2 < R_1$ aus. Daraus folgt, daß der Anhänger (2) nicht in der Spur (7) des Zugfahrzeugs (1), sondern in einer eigenen, engeren Spur (8) nachläuft. Das mit einem Frontmähwerk (9) eines Schlepperfahrzeugs gemähte Gut kann demnach nicht mit einem ·als Ladewagen ausgebildeten Anhänger (2) in dieser Kurvenfahrt erfaßt werden.

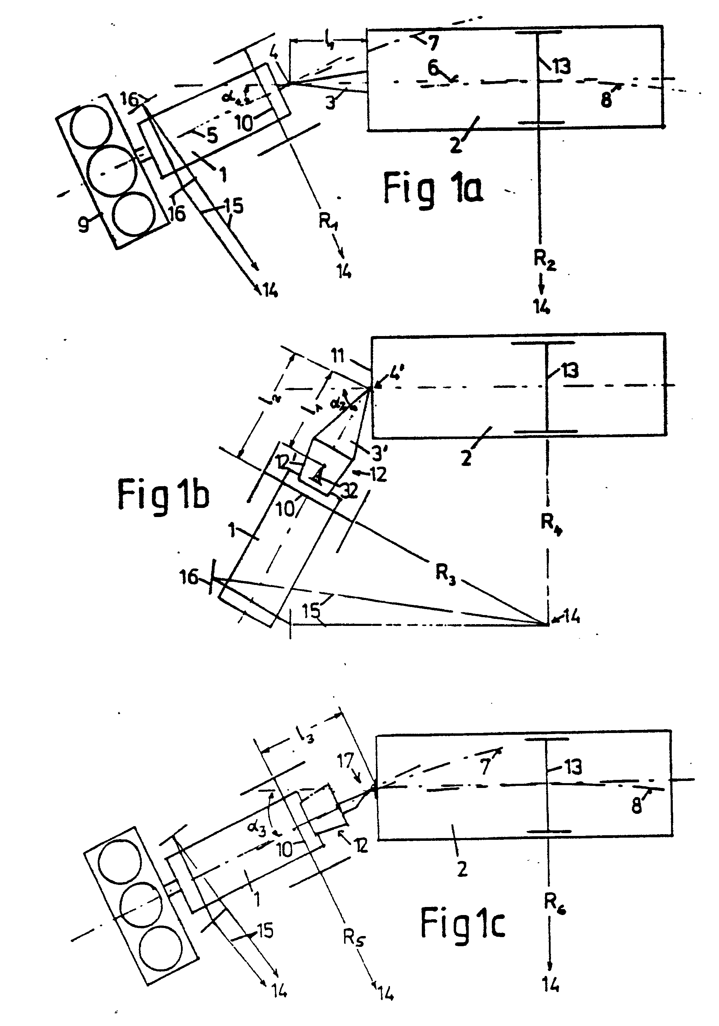

Um den Anhänger in Fig. 1a der Zugfahrzeugspur nachfahren zu lassen, muß der Drehpunkt des Ankupplungspunktes (4) weiter nach hinten versetzt werden, um eine Art Ausschwenkarm zur Durchführung eines großen Radius zu schaffen. Dies ist in der Fig. 1b dargestellt. Sinngemäß ist hier die Deichsel (3') umgekehrt am Zugfahrzeug (1) befestigt, so daß der Drehpunkt (4') vor dem Anhänger (2) zu liegen kommt. Der Abstand von der Anhängerfront (11) bis zum Zugmaul (32) bzw. zur Anhängerkupplung am Zugfahrzeug ist mit $1_1$, der Abstand von der Zugfahrzeugachse (10) zur Anhängerfront (11) bzw. "pick up" mit $1_2$ bezeichnet. Diese Länge $1_2$ ist der wirksame Hebelarm des Anhängers auf die Zugfahrzeugachse (10). Die Deichsel (3') selbst kann an einem üblichen Dreipunktbock (12) eines Schlepperfahrzeugs mit Ober- und Unterlenker (12') befestigt sein.

Bei einer derartigen bekannten Anordnung nach Fig. 1b wirken hohe Momente auf das Zugfahrzeug, so daß es bei Kurvenfahrten unter Umständen zu einem unkontrollierten Fahrverhalten kommt. Durch diese bekannte Maßnahme kann allerdings das Spurverhalten des Anhängers (2) nahezu dem des Zugfahrzeugs angepaßt werden. Der Spurradius des Zugfahrzeugs (1) ist mit $R_3$, der Spurradius des Anhängers mit $R_4$ bezeichnet, wobei $R_3 \approx R_4$ ist.

Der Spurradius in Figuren 1a und 1b sowie in der Fig. 1c ergibt sich durch die Verlängerung und dem Schnittpunkt der Zugfahrzeughinterachse (10) mit der Anhängerachse (13) und führt zu dem Schnittpunkt (14). Dieser Schnittpunkt (14) wird auch durch die gedachte Linie (15) geschnitten, die sich als Senkrechte auf die eingeschlagenen Vorderräder (16) des Zugfahrzeugs ergibt.

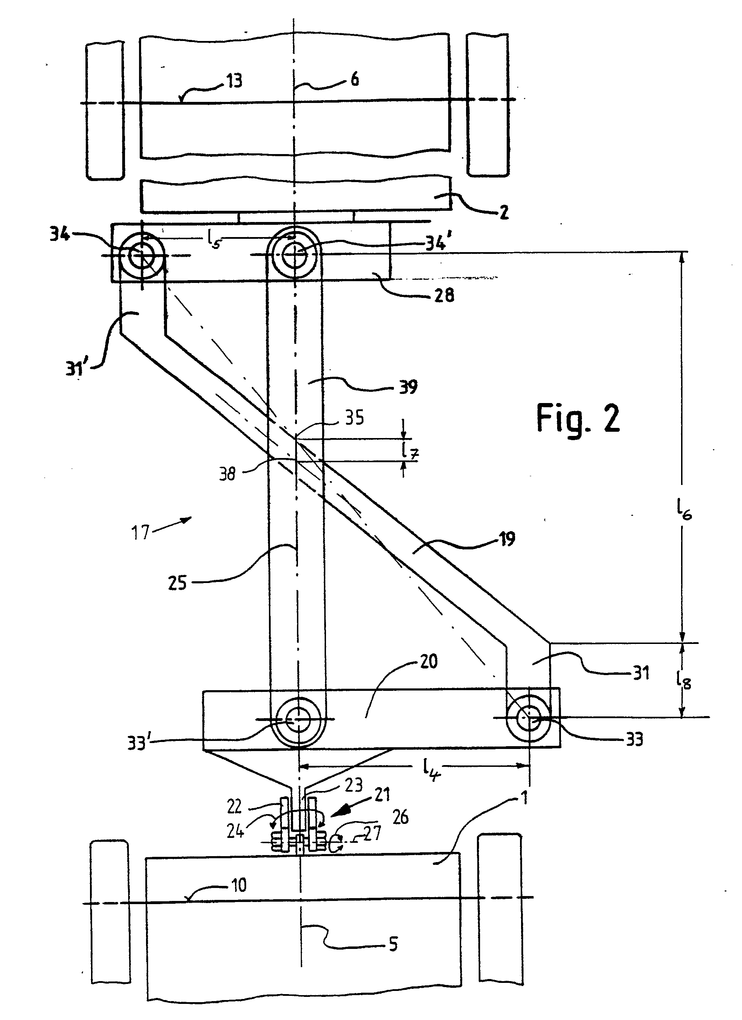

In Fig. 1c bzw. der Fig. 2 ist die Erfindung näher dargestellt. In Fig. 1c führt das Zugfahrzeug (1) eine Kurvenbewegung mit dem Einschlagwinkel $\alpha_3$ aus. In diesem Fall ist an dem Dreipunktbock (12) das Kupplungssystem (17), wie in Fig. 2 noch näher dargestellt, befestigt. Durch die außerordentlich kurze Baulänge des Kupplungssystems (17) ergibt sich eine Länge zwischen Schlepperhinterachse (10) und Anhänger (2) von $1_3$, was der üblichen Deichsellänge $1_1$ entspricht. Trotz dieser geringen Baulänge führt das Zugfahrzeug (1) einen Spurradius von $R_5$ aus, was in etwa der Spurweite $R_6$ des Anhängers (2) entspricht ($R_5 \approx R_6$). Der Anhänger fährt demnach nahezu auf der gleichen Spur wie das Zugfahrzeug.

In der Fig. 2 ist die erfindungsgemäße Anhängervorrichtung für einen einachsigen Anhänger näher dargestellt.

Bei dem in der Fig. 2 dargestellten Ausführungsbeispiel ist eine Diagonalstrebe (19) vorgesehen, wobei eine Kröpfung (31, 31') an beiden Enden der Diagonalstrebe (19) vorgenommen ist. Anstelle einer aus dem Stand der Technik bekannten zweiten Diagonalstrebe enthält das Ausführungsbeispiel nach Fig. 2 eine in der Längsachse (25) angeordnete gerade Zugstrebe (39), die in Geradeausfahrt mit der Längsachse (5) des Zugfahrzeugs und der Längsachse (6) des Anhängers fluchtet. Die Diagonalstrebe (19) sowie die Zugstrebe (39) sind seitens des Zugfahrzeugs (1) an einem quer liegenden Anschlußflansch (20) an den Gelenkpunkten (33) bzw. (33') und seitens des Anhängers (2) an dem quer liegenden Anschlußflansch (28) über die Gelenkpunkte (34 bzw. 34') angelenkt.

Mit der in Fig. 2 vorgesehenen asymmetrischen Anordnung einer Kupplungsvorrichtung läßt sich ein sehr gutes Ergebnis einer spurgetreuen Nachlaufeigenschaft eines einachsigen Anhängers verwirklichen. In der Fig. 2 ist ein einachsiger Anhänger (2) dargestellt, dessen Anhängerachse (13) weiter nach hinten versetzt ist.

Die Anordnung nach Fig. 2 hat gegenüber bekannten Kupplungsanordnungen den Vorteil, daß die gerade Zugstrebe (39) in Geradeausfahrt eine unmittelbare Kraftübertragung in der Längsachse (5, 25, 6) der Fahrzeuge ermöglicht. In dem Fall treten keine Biegemomente auf die Diagonalstrebe (19) auf.

Erst in der Kurvenfahrt verhält sich dann die Diagonalstrebe (19), d. h. die die Längsachse (25) kreuzende Strebe in Verbindung mit der Zugstrebe (39) in ähnlicher Weise, wie dies nach Art eines asymmetrischen Scherensystems bekannt ist.

Die Ankupplung des Anschlußflansches (20) an das Zugfahrzeug (1) geschieht über ein Gelenksystem 21.

Das Gelenk (21) ist ein Spezialgelenk, wie es z. B. in der DE 33 16 128 mit Bezugsziffer (16) dargestellt und beschrieben ist. Der Anschlußflansch (20) kann zunächst über ein rohrförmiges Gelenkteil mit Anschlußzapfen (23) eine Torsionsbewegung (Pfeil 24) um die Längsachse (25) des Scherensystems (17) ausführen, wobei die Längsachse (25) in Geradeausfahrt mit der Längsachse (5) des Zugfahrzeugs und der Längsachse (6) des Anhängers fluchtet. Eine Schwenkbewegung des Anschlußflansches (20) in der in Fig. 2 dargestellten Zeichenebene ist jedoch nicht möglich. In der Horizontalebene besteht demnach eine starre Verbindung zwischen dem Anschlußflansch (20) und dem Zugfahrzeug (1).

Das Torsions/Kipp-Gelenk (21) führt eine weitere Kippbewegung (Pfeil 26) um die horizontale Drehachse (27) durch. Dies ist notwendig, sofern eine Stützlast des Anhängers (2) auf das Gelenk wirkt, so daß dieses eine vertikale Knickbewegung in der Vertikalebene durch die Längsachsen (5, 6, 25) durchführt.

Im Ausführungsbeispiel nach Fig. 2 mit einem einachsigen Anhänger muß das Torsions/Kipp-Gelenk (21) die Stützlast des einachsigen Anhängers (2) aufnehmen, so daß die vertikale Knickbewegung in der Vertikalebene durch die Längsachsen (5, 6, 25) durchgeführt werden kann. Weiterhin kann das Torsions/Kipp-Gelenk (21) über einen nicht näher dargestellten Dreipunktbock mit Ober- bzw. Unterlenker am Schlepperfahrzeug befestigt sein. Wie in der Fig. 2 dargestellt, kann es jedoch auch als eigenständige Kupplung direkt am Schlepperfahrzeug oder am Dreipunktbock befestigt sein.

Durch die in Fig. 2 dargestellte Kröpfung (31, 31') der Diagonalstrebe (19) wird der normalerweise vorhandene Kreuzungspunkt (35) einer gedachten Diagonalverbindung mit der Zugstrebe (39) um den Betrag $1_7$ in Richtung zum Zugfahrzeug (1) zur Bildung des Kreuzungspunktes (38) verschoben. Der Kreuzungspunkt (38) der Diagonalstrebe (19) ist demnach weiter von der Achse (13) entfernt als ohne Kröpfung. Hierdurch wird das Lenksystem wesentlich stabiler, so daß ein Ausbrechen der Achse (13) des einachsigen Anhängers vermieden wird. Die Länge der Kröpfung $1_8$ beträgt etwa 1/3 des Abstandes $1_6$ der beiden Befestigungsflansche (20, 28) für den Diagonalstreben 19 bzw. den Zugstreben 39.

In Fig. 2 ist weiterhin ausgeführt, daß der Abstand $1_4$ der beiden Gelenkpunkte (33, 33') am Anschlußflansch (20) größer ausgebildet ist, als der Abstand $1_5$ der Gelenkpunkte (34, 34') am zweiten Anschlußflansch (28). Das Verhältnis $1_4 : 1_5$ beträgt etwa 1,5 : 1 bis 3 : 1, je nach gewünschter Lenkgeometrie. Durch die Verkleinerung des Abstands $1_5$ gegenüber dem Abstand $1_4$ wandert der Kreuzungspunkt (38) der Streben (39, 19) in Richtung zum Anhänger (2), was zu einer gewünschten Verlegung des virtuellen Ankupplungspunktes in Richtung Anhänger (2) und damit zu einer Verbesserung der spurgetreuen Nachlaufeigenschaften führt. Allerdings vergrößert sich hierbei der Abstand $1_6$ der beiden Anschlußflansche (20, 28), sofern die Baulänge des Diagonalstrebens (19) beibehalten wird.

Da die Achse (13) des einachsigen Anhängers (2) im allgemeinen wesentlich weiter von der Kupplungsvorrichtung entfernt angeordnet ist, kommt es kaum zu unruhigen Bewegungen wie beim scherenartigen Diagonalstrebensystem des Standes der Technik. Eine Abstandsvergrößerung der Achse (13) zum Diagonalstreben (19) durch eine verlängernde Kröpfung (31') ist hier deshalb nicht unbedingt erforderlich.

Die Anschlußgelenke (33, 33' sowie 34, 34') in der Ausführungsform nach Fig. 2 können als sogenannte Reibgelenke mit einer inneren Reibung ausgestattet sein. Hierdurch findet eine wesentliche Dämpfung des Bewegungsablaufes des Kupplungssystems statt, wodurch eine Schlingerbewegung des nachfolgenden Anhängers weitgehend vermieden werden kann.

Die in Fig. 2 dargestellten Gelenkpunkte (33, 34) können auch als Kugelgelenke ausgeführt werden, zur Durchführung von axialen und vertikalen Drehbewegungen des Diagonalstrebens (19) bzw.

Zugstrebens (39).

Die Anhängervorrichtung kann sowohl bei landwirtschaftlichen Schlepperfahrzeugen als auch bei sonstigen einachsigen Anhängern verwendet werden. Insbesondere ist die Verwendung bei Wohnwagenanhängern vorteilhaft, da gute Nachlaufeigenschaften bei kurzer Kupplungsbaulänge sowie gute Dämpfungseigenschaften gewährleistet sind.

## Patentansprüche

1. Anhängervorrichtung für Zugfahrzeuge, insbesondere landwirtschaftliche Zugfahrzeuge zum Anhängen eines Anhängers, mit wenigstens einer zwischen Zugfahrzeug (1) und Anhänger (2) angeordneten Diagonalstrebe (19), die am Zugfahrzeug (1) und am Anhänger (2) an je einem quer angeordneten Anschlußflansch (20, 28) angelenkt ist, wobei der Anschlußflansch (20) am Zugfahrzeug (1) starr und um eine horizontale Querachse (27) kippbar angelenkt befestigt ist, dadurch gekennzeichnet, daß der an einem einachsigen Anhänger (2) befestigte, quer angeordnete Anschlußflansch (28) über eine einseitig oder beidseitig gekröpfte Diagnalstrebe (19) und eine, bei Geradeausfahrt in den fluchtenden Längsachsen (5, 6) von Zugfahrzeug (1) und Anhänger (2) liegende gerade Zugstrebe (39) mit dem zugfahrzeugseitigen Anschlußflansch (20) gelenkig verbunden ist.

2. Vorrichtung nach Anspruch 1, dadurch gekennzeichnet, daß der gerade, in Richtung Längsachse (5, 6) des Fahrzeugs (1, 2) abgekröpfte Teil (31, 31') der Diagonalstrebe (19) am Anschlußflansch (20) des Zugfahrzeugs (1) und/oder am Anschlußflansch (28) des Anhängers (2) vorgesehen ist.

3. Vorrichtung nach Anspruch 1 oder 2, dadurch gekennzeichnet, daß der Anschlußflansch (20) mit dem Zugfahrzeug (1) über ein Torsionsund Kipp-Gelenk (21) verbunden ist, welches eine Torsionsbewegung um die Längsachse (25) und eine Kippbewegung um eine horizontale Querachse (27) ausführt.

## Claims

1. A trailer device for tractor vehicles, particularly agricultural tractors for the attachment of a trailer, with, disposed between the tractor vehicle (1) and the trailer (2), at least one diagonal strut (19) which is articulated on the tractor vehicle (1) and on the trailer (2) on a respective transversely disposed connecting flange (20, 28), the connecting flange (20) on the tractor vehicle (1) being rigidly fixed and being articulated to tilt about a horizontal transverse axis (27), characterised in that the transversely disposed connecting flange (28) which is fixed to a single-axle trailer (2) is articulatingly connected via a unilaterally or bilaterally cranked diagonal strut (19) and a straight towing strut (39) which, when the vehicle is travelling straight ahead, is disposed in the aligned longitudinal axes (5, 6) of tractor vehicle (1) and trailer (2) and is articulatingly connected to the connecting flange (20) at the tractor vehicle end.

2. A device according to Claim 1, characterised in that the straight part (31, 31') of the diagonal strut (19) which is cranked in the direction of the longitudinal axis (5, 6) of the vehicle (1, 2) is provided on the connecting flange (20) of the tractor vehicle (1) and/or on the connecting flange (28) of the trailer (2).

3. A device according to Claim 1 or 2, characterised in that the connecting flange (20) is connected to the tractor vehicle (1) via a torsion and tilting joint (21) which performs a torsion movement about the longitudinal axis (25) and a tilting movement about a horizontal transverse axis (27).

## Revendications

1. Dispositif pour véhicules tracteurs, en particulier tracteurs agricoles, pour remorquer une remorque, comportant au moins une diagonale de pantographe (19), agencée entre le tracteur (1) et la remorque (2), qui est articulée au tracteur (1) et à la remorque (2), à chaque fois, à une semelle de raccordement (20,28) agencée transversalement, la semelle de raccordement (20) étant fixée rigidement au tracteur (1) et pouvant basculer autour d'un axe transversal horizontal (27),
caractérisé en ce que la semelle de raccordement (28) agencée transversalement, fixée à une remorque à un seul essieu (2) est articulée à la semelle de raccordement (20) côté tracteur par l'intermédiaire d'une diagonale de pantographe (19), coudée d'un côté ou des deux côtés, et d'un tirant rectiligne (39), se trouvant, en déplacement rectiligne, sur les axes longitudinaux alignés (5,6) du tracteur (1) et de la remorque (2).

2. Dispositif selon la revendication 1,
caractérisé en ce que la partie droite (31,31') de la diagonale de pantographe (19), coudée en direction de l'axe longitudinal (5,6) du véhicule (1,2), est prévue sur la semelle de raccordement (20) du tracteur (1) et/ou sur la semelle de raccordement (28) de la remorque (2).

3. Dispositif selon la revendication 1 ou 2, caractérisé en ce que la semelle de raccordement (20) est reliée au tracteur (1) par l'intermédiaire d'une articulation (21) à torsion et basculement, laquelle effectue un mouvement de torsion autour de l'axe longitudinal (25) et un mouvement de basculement autour de l'axe transversal horizontal (27).

Fig 1a

Fig 1b

Fig 1c

Fig. 2